# NEW EUROPEAN PATENT SPECIFICATION

(11) **EP 2 809 738 B2**
(45) Date of publication and mention of the opposition decision: **13.03.2024**
(45) Mention of the grant of the patent: 02.12.2015
(21) Application number: 13702879.1
(22) Date of filing: 31.01.2013
(51) Int. Cl.: C09J 7/02, B32B 27/08, C08L 23/12, G09F 3/10

(54) **ORIENTED IMPACT COPOLYMER POLYPROPYLENE FILM**
COPOLYMERPOLYPROPYLENFILM MIT ORIENTIERTER AUSWIRKUNG
FILM EN COPOLYMÈRE DE POLYPROPYLÈNE RÉSISTANT AUX CHOCS ORIENTÉ

(30) Priority: 31.01.2012 US 201261592659 P
(43) Date of publication of application: 10.12.2014
(73) Proprietor: Avery Dennison Corporation, Mentor, OH 44060 (US)
(72) Inventor: HENDERSON, Kevin, O., Willoughby Hills, OH 44094 (US)
(74) Representative: Müller-Boré & Partner Patentanwälte PartG mbB
(86) International application number: PCT/US2013/024003
(87) International publication number: WO 2013/116434

(56) References cited:
- WO-A1-03/093004
- WO-A1-2005/040270
- US-A1- 2003 143 357
- US-A1- 2004 013 870
- US-A1- 2004 224 175
- US-A1- 2006 008 666
- US-A1- 2006 024 520
- US-A1- 2006 258 811
- US-A1- 2009 155 614
- DATABASE WPI Week 198716 Thomson Scientific, London, GB; AN 1987-111560 XP002713260, & JP S62 56117 A (MITSUI TOATSU CHEM INC) 11 March 1987 (1987-03-11)
- JAN H. SCHUT et al.: "MDO Film: Lots of Promise, Big Challenges", Plastics Technology, February 2005 (2005-02), pages 1-4,

## Description

### Cross Reference to Related Application

The present application claims the benefit of U.S. Provisional Application No. 61/592,659 filed January 31, 2012, which is incorporated herein in its entirety.

### Field

### Background

The present subject matter relates to labels prepared from polypropylene based films. More particularly, the subject matter relates to labels prepared from polypropylene based compositions comprising an impact propylene polymer that are ink printable, die-cuttable and/or scuff resistant.

It has long been known to manufacture and distribute pressure sensitive adhesive stock for labels by providing a layer of facestock material and a layer of pressure sensitive adhesive which in turn is covered by a release liner or carrier. The liner or carrier protects the adhesive during shipment and storage and allows for efficient handling of an array of individual labels after the labels are die-cut and the waste is stripped from the layer of facestock material up to the point where the individual labels are dispensed in sequence on a labeling line. A typical method of die cutting uses a steel die blade. During the time from die-cutting to dispensing, the liner or carrier remains uncut and may be rolled and unrolled for storage, transit and deployment of the array of individual labels carried thereon.

In many label applications, it is desirable that the facestock material be a film of polymeric material which can provide properties lacking in paper, such as clarity, dorability, strength, water-resistance, abrasion-resistance, gloss and other properties. Historically, polymeric facestock material of thicknesses greater than about 3 mils (75 microns) have been used in order to assure dispensability in automatic labeling equipment For example, plasticized polyvinyl chloride films about 3.5 to 4.0 mils (87.5 to 100 microns) thick were used in label application because these films exhibited the desired flexibility characteristics. However, the migration of the plasticizers used in PVC films to convert the normally rigid films to flexible films was recognized as a major problem for these types of films respiring in loss of desirable properties such as adhesion and flexibility, as well as other problems such as ink anchorage failure, color buildup, and shrinkage. Eventually, migration of the plasticizer results in wrinkling, cracking and visual deterioration of the facestock and/or label. Also, it is desirable to reduce the thickness or "down-gauge" the facestock material in order to attain savings in material costs. Such reduction in facestock thickness often has resulted in reduced stiffness and the inability to die-cut and dispense the labels in a reliable and commercially acceptable manner using automatic machinery. In addition, environmental reasons exist for preparing labels from facestock polymers other than polyvinyl chloride.

Polymeric materials suggested in the prior art as useful in preparing labels include biaxially-oriented polypropylene ("BOPP") of thicknesses as low as about 2.0 mils (50 microns). These materials provide cost savings as they are relatively inexpensive, and they have sufficient stiffness to dispense well. However, these materials also have relatively high tensile modulus values in both machine direction (MD) and cross direction (CD) which results in unacceptable conformability characteristics. When biaxially-oriented films are applied to rigid substrates such as glass bottles, the application is not completely successful. The relatively stiff labels have a tendency to bridge surface depressions and the mold seams resulting from bottle forming processes result in an undesirable surface appearance of the applied label stimulating trapped air bubbles. This has somewhat impeded the use of pressure sensitive adhesive labels to replace prior glass bottle labeling techniques such as ceramic ink directly bonded to the bottle surface during glass bottle manufacturing processes as customers find the appearance unattractive. Such ceramic ink techniques are environmentally undesirable due to objectionable ink components which contaminate crushed bottle glass in recycling processes. Attempts to use the relatively stiff oriented polypropylene films on flexible substrates such as plastic bottles also have not been completely successful because the labels do not have the flexibility required to conform to the flexible plastic containers. Oriented polypropylene films are also more difficult to print than PVC or polyethylene films.

Other useful material include unoriented polyethylene and polypropylene films that are also relatively inexpensive and conformable. However, both of these films are difficult to die-cut and do not dispense well at low calipers. In Europe, an unoriented, relatively thick polyethylene facestock has been used successfully in preparing labels. The facestock is die-cuttable and the labels can be dispensed in high speed automatic dispensing equipment. The normal thickness of this "standard" polyethylene facestock in Europe is about 4.0 mils (100 microns). Attempts to reduce the gauge of the polyethylene facestock to reduce costs has not yet met with significant success because the thinner polyethylene facestock is not readily die-cuttable with the die leaving a mark on the liner, stringers on the cut label, and/or hangers between the labels. A stringer (also called ticker) is a small thread of material between the label and the matrix after die cutting. Thus, the label and matrix are still connected by a small string of material. A stringer occurs when the label is not clean cut, and it can cause the label to be removed with the waste label material. A hanger occurs when a segment of the CD label material breaks during CD stripping. Additionally, the thinner facestock becomes difficult to dispense at higher speeds over a peel plate because of reduced stiffness.

In addition, many previously known polypropylene labels, particularly those including blends of ethylene vinyl acetate (EVA) and polypropylene, tend to produce relatively copious amounts of dust or polymeric residue. This is undesirable because periodic cleaning of associated equipment is then required. It is believed that such dust results from the relatively poor resistance these materials exhibit against scuffing or other contact with equipment and materials.

Since labels are intended to carry information, the printability of filmic pressure sensitive adhesive labels is very important. Printability is defined by the sharpness and brightness of the image and by the ink anchorage. The sharpness is closely related to the surface tension of the print surface. The ink anchorage is often tested by a tape test (Finat test: FTM21). In general, PVC is printable with a variety of inks intended to be used with PVC. For polyolefin films, the inks are waterbased (especially in the US) or designed for UV drying (especially in Europe). In general, all polyolefin films can be printed with UV inks after on-press corona treatment, polyethylene (PE) being better than polypropylene (PP) mainly on ink adhesion. For waterbased inks an additional primer or topcoat is needed to achieve good ink anchorage.

In view of these concerns and problems, a need exists for an improved film material that exhibits good printability properties, is readily die-cuttable, and avoids prior art problems of dust formation and poor scuff resistance.

### Summary

The difficulties and drawbacks associated with previously known labels and systems are addressed in the present labels and related methods.

In one aspect, the subject matter provides a label assembly comprising an axially oriented label facestock according to claim 1.

In another aspect, the subject matter provides a method of labeling according to claim 7.

As will be realized, the subject matter is capable of other and different embodiments and its several details are capable of modifications in various respects, all without departing from the subject matter. Accordingly, the drawings and description are to be regarded as illustrative and not restrictive.

### Brief Description of the Drawings

Figure 1 is a graph of die cut friction energies for various samples evaluated.
Figure 2 is a graph of haze comparisons for various samples evaluated.
Figure 3 is a graph of clarity comparisons for various samples evaluated.
Figure 4 is a graph of gloss comparisons for various samples evaluated.
Figure 5 is a graph of stiffness comparisons for various samples evaluated.
Figure 6 is a graph of modulus comparisons for various samples evaluated.
Figure 7 is a graph of density comparisons for various samples evaluated.
Figure 8 is a graph of calculated die cut resistance for various samples evaluated.
Figure 9 is a graph of calculated conformability for various samples evaluated.
Figure 10 is a graph of measured haze for various samples evaluated.
Figure 11 is a graph of calculated effect of increasing machine direction orientation on die cutting for various samples evaluated.
Figure 12 is a graph of calculated effect of increasing machine direction orientation on conformability for various samples evaluated.
Figure 13 is a graph of calculated die cut resistance for various samples evaluated.
Figure 14 is a graph of calculated conformability for various samples evaluated.

Oriented impact copolymer polypropylene (ICP) film compositions and constructions are described. The oriented films are mono-axially oriented. One application of the mono-axially oriented impact copolymer polypropylene film compositions is for use in adhesive label constructions.

In the embodiments of the present invention, impact copolymer polypropylene (ICP) is blended with homopolymer polypropylene (HPP) and/or random copolymer polypropylene (RCP). The addition of the ICP decreases the amount of temperature and stretch required to fully orient the HPP and the RCP. This creates a film with good stiffness and contact clarity. With the decrease in orientation temperature, it is now achievable to create a coextrusion with polyethylene (PE), without sticking to the rolls in a Machine Direction Orienter (MDO). The use of the ICP in blends allows for exterior skins based primarily on PE. Furthermore, in accordance with the present subject matter, it was discovered that adding a low percentage of alpha-olefin copolymer to PE, eliminates or at least significantly reduces the occurrence of natural surface "tears" that otherwise occur during orientation.

Preferred embodiment labels can include material blends having a wide range of ICP blended with one or more of HPP and RCP. In certain applications it is preferred to use blends containing at least 10%, more preferably at least 25%, and more preferably at least 50% ICP. In other applications, it is preferred to use blends containing less than 50%, more preferably less than 25%, and more preferably less than 10% ICP. It will be appreciated that selectively adjusting the proportion of ICP in a material layer enables one to readily modify the die cut resistance, conformability, and/or haze of the resulting material layer.

The mono-axially oriented impact copolymer polypropylene film compositions comprise a heterophase propylene copolymer which is monoaxially oriented. The films may be coextruded with one or more adhesive layer(s), print layer(s) and/or other top layer(s), and the coextrudate stretched to provide the mono-axial orientation. The heterophase propylene copolymer provides good die cutting and the orientation provides good stiffness. These features are obtained while avoiding the problem of dusting which has occurred with currently used materials that include a blend of ethylene vinyl acetate (EVA) and polypropylene. Surprisingly, the heterophase propylene copolymer provides good die-cuttability even though it has improved impact properties which are normally associated with increased toughness, which in turn might be expected to lead to a decrease in die-cuttability.

Heterophase polypropylene is also referred to as impact polypropylene or impact-modified polypropylene, and may also be referred to as polypropylene block copolymer. Heterophasic propylene copolymers incorporate rubbery properties to the normally rigid backbone of polypropylene. These copolymers are produced in a reaction by sequential copolymerization of propylene with elastomers such as ethylene-propylene rubber (EPR) and ethylene-propylene-diene monomer rubber (EPDM rubber). The copolymers can be tailored for specific applications resulting from the flexibility in the selection of feedstocks, fillers, and additives, as well as the polymerization sequences and conditions. The copolymers contain from 8 to 20% elastomer. The addition of the elastomeric, rubbery material to the polypropylene matrix increases the resiliency of the materials obtained and makes them useful in applications where good impact resistance at low temperature is needed. In the past, heterophase propylene copolymers have been widely used in automobile manufacturing. These materials are collectively referred to herein as impact copolymer polypropylene (ICP).

### Detailed Description of the Embodiments

Heterophase propylene copolymers are available in high, medium, and low impact versions. Generally, impact properties may be measured by ASTM D256 in what is referred to as the Notched Izod Test at 23° C. Using this test, "high impact" is defined as no break, "medium , impact" is defined as break at 3-4 ft-lb/in and "low impact" is defined as break at 1-2 ft-lb/in impact. Another method of determining high, medium, or low impact for heterophase propylene copolymers is by extraction of the rubbery component, for example the EPR component. On this basis, "high impact" is defined as an extractable EPR content greater than 16%, "medium impact" is 12-16% extractable EPR, and "low impact" is 8-12% extractable EPR. Finally, another method used by Dow for classifying as high, medium, or low impact depends on the ethylene content added to the polymerization reactor. By this definition, "high impact" is 15-20% ethylene, "medium impact" is 9-15% ethylene, and "low impact" is 5-9% ethylene. The importance of impact modification is in the resultant tensile properties. The single impact polypropylene resin can replace currently used blends of two or more resins. The benefits include reduced cost, improved die-cuttability, and reduced dust production during die cutting. Accumulation of dust results in line stoppages for cleaning.

It is contemplated that the ICP blend may be used either alone or blended with other polymers, such as polyethylenes, polypropylenes, other polyolefins, (meth)acrylates, ethylene vinyl acetate copolymers, ionomers, and a variety of other polymers and copolymers in forming the film compositions. A wide array of polyethylenes can be used such as low density polyethylene, linear low density polyethylene, and metallocene-catalyzed linear low density polyethylene. A wide array of polypropylenes can be used such as homopolymer polypropylene, and random copolymer polypropylene. It is also contemplated that copolymers of ethylene and propylene can be used such as for example alpha-olefin ethylene/propylene copolymer. Various ionomers can be used such as zinc ionomers. It will be appreciated that in no way is the subject matter limited to any of these particular materials or combinations of materials. Instead, it is contemplated that a wide array of other materials can be utilized.

Other additives that may be present in these compositions include nucleating agents, antioxidants, and processing aids. The nucleating agent, used to add stiffness, may be a sorbitol type or an organic phosphite, present up to about 2,000 ppm. The antioxidants may be a combination of phenolics and phosphates, present from about 800 to about 1,500 ppm each. The processing aid may be calcium stearate, present from about 300 to about 700 ppm, with the lower amounts preferred. Similarly, it will be understood that the subject matter includes the use of other additives and agents.

Preferably, films comprising ICP are relatively thin and have a thickness less than about 3 mils. It will however be appreciated that the subject matter includes films that have thicknesses greater than 3 mils.

The preferred embodiment label assemblies exhibit shrink characteristics. The film(s) are monoaxially oriented Methods for orienting and/or forming shrink films are described in one or more of the following patents, all owned by the assignee of the present application: US Patents 7,700,189; 6,919,113; 6,808,822; 6,716,501; 6,436,496; 5,747,192; 5,242,650; and 5,190,609. Additional details of forming oriented films are provided in one or more of the following patents: US Patents 4,020,141; 4,059,667; 4,124,677; 4,399,181; 4,430,377; 4,551,380; 4,724,185; 4,797,235; 4,957,790; 5,089,352; 5,254,393; and 5,292,561.

The label assemblies also include one or more layers of a pressure sensitive adhesive. And, the preferred label assemblies may also include one or more liners or liner assemblies. Preferably, the liner or liner assembly includes a silicone material.

The present subject matter also includes various methods involving the preferred label assemblies, i.e., methods of labeling containers. The methods involve providing a label assembly according to claim 1. The methods also involve contacting the adhesive with the container to thereby adhere or secure the substrate to the container. The adhesive is a pressure sensitive adhesive. The preferred embodiment methods may also optionally include one or more heating operations. Applying heat to the oriented films will result in shrinkage of the film(s). Heat may be applied prior to, during, or after application of the label substrate to the container. One or more optional printing operations may also be employed using ultraviolet (UV) inks, UV flexo inks, solvent-based inks, and water-based inks.

Also provided are techniques for selectively adjusting the die cut resistance and/or conformability of a polymeric layer and particularly of such a layer comprising ICP, by selective orientation of the material in a machine direction. For example, die cutting resistance of a film can be reduced by using a particular extent of machine direction orientation. In addition, conformability of a film can be reduced by use of a particular extent of machine direction orientation.

### Reference Examples (not in accordance with the present invention)

A series of trials were conducted to evaluate various properties and characteristics of several film assemblies. Specifically, characteristics related to "ticker" strength (i.e., die cut friction energy), haze, clarity, gloss, stiffness or bending resistance, elastic modulus, and density were evaluated.

Tables 1A and 1B summarize various film constructions designated as samples A-E. Generally, each sample included on outer "print" layer, an inner "core" layer, and an adhesive layer. In all samples, the inner core layer constituted the majority weight and thickness proportion of the samples. Samples included various amounts of ICP in the core layer, and optionally in the print layer and in the adhesive layer. A control sample having a similar structure included a core layer free of ICP.

**Table 1A - Samples A, B, and C**

| Sample | A | | | B | | | C | | |
|---|---|---|---|---|---|---|---|---|---|
| | Print | Core | Adhesive | Print | Core | Adhesive | Print | Core | Adhesive |
| Layer % | 5.0% | 90.0% | 5.0% | 5.0% | 90.0% | 5.0% | 5.0% | 90.0% | 5.0% |
| AB | 3.0% | | 1.0% | 10.0% | | 5.0% | 10.0% | | 10.0% |
| AO | | | | | | | | | |
| EVA (18%) | | | 25.05% | | | | | | |
| HPP | | | | 23.0% | 60.0% | 70.0% | | | |
| ICP | 48.5% | 100.0% | 74.0% | | 40.0% | | | 20.0% | |
| LLDPE | | | | 42.0% | | 10.0% | 80.0% | | 80.0% |
| mPE | | | | 25.0% | | 15.0% | | | |
| RCP | | | | | | | | 80.0% | |
| Zn Ion | 48.5% | | | | | | | | |
| a-PE/PP | | | | | | | 10.0% | | 10.0% |
| MDO Ratio | 5.50:1 | | | 5.30:1 | | | 5.00:1 | | |

**Table 1B - Samples D and E**

| Sample | D | | | E | | |
|---|---|---|---|---|---|---|
| | Print | Core | Adhesive | Print | Core | Adhesive |
| Layer % | 5.0% | 90.0% | 5.0% | 7.6% | 84.8% | 7.6% |
| AB | 10.0% | | 7.0% | 10.0% | | 7.0% |
| AO | 2.0% | | | | | |
| EVA (18%) | | | | | | |
| HPP | 24.0% | 15.0% | 70.0% | 23.0% | 60.0% | 70.0% |
| ICP | | | | | 40.0% | |
| LLDPE | 40.0% | | 9.0% | 42.0% | | 9.0% |
| mPE | 24.0% | 15.0% | 14.0% | 25.0% | | 14.0% |
| RCP | | 70.0% | | | | |
| Zn Ion | | | | | | |
| a-PE/PP | | | | | | |
| MDO Ratio | 5.30:1 | | | 5.30:1 | | |

Table 2 summarizes and describes each of samples A-E.

**Table 2 - Samples A-E**

| Sample | Description |
|---|---|
| A | ICP Skins/Core |
| B | HPP/ICP Core |
| C | PE-Skins + RCP/ICP Core |
| D | Control |
| E | HPP/ICP Core |

Table 3 is a listing of various materials used in the samples of Tables 1A, 1B, and 2. These are the generic names for the materials used in the trials.

**Table 3 - Materials in Samples**

| Code | Description |
|---|---|
| AB | Anti-Block |
| AO | Anti-Oxidant |
| EVA | Ethylene Vinyl Acetate |
| HPP | Homopolymer Polypropylene |
| ICP | Impact Copolymer Polypropylene |
| LLDPE | Linear Low Density Polyethylene |
| mPE | Metallocene-catalyzed Linear Low Density Polyethylene |
| RCP | Random Copolymer Polypropylene |
| Zn Ion | Zinc Ionomer |
| a-PE/PP | Alpha-Olefin Ethylene/Propylene Copolymer |

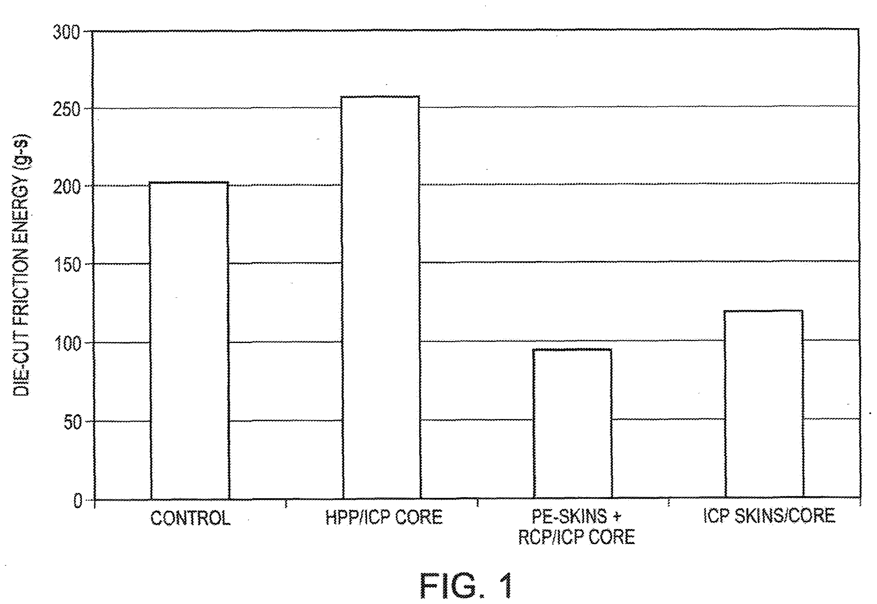

Figure 1 illustrates die cut friction energy determinations for samples B and E (HPP/ICP core), C (PE-skins + RCP/ICP core), and A (ICP skins/core), compared to a control sample D. Generally, it is desired that die cut friction energy be low. Accordingly, samples A and C exhibited improved die cut properties as compared to the control sample and samples B and E. Samples B and E exhibited higher die cut friction energy than the control sample.

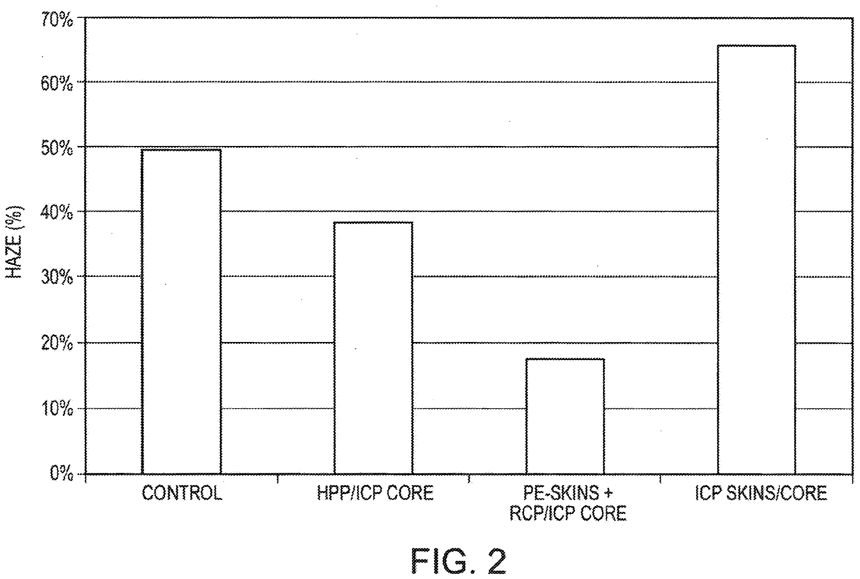

Figure 2 illustrates natural film haze measurements of the samples. As will be appreciated, the haze will generally decrease upon application of an adhesive and over-varnish. Samples B, E, and C exhibited less haze than the control sample, while sample A exhibited greater haze than the control.

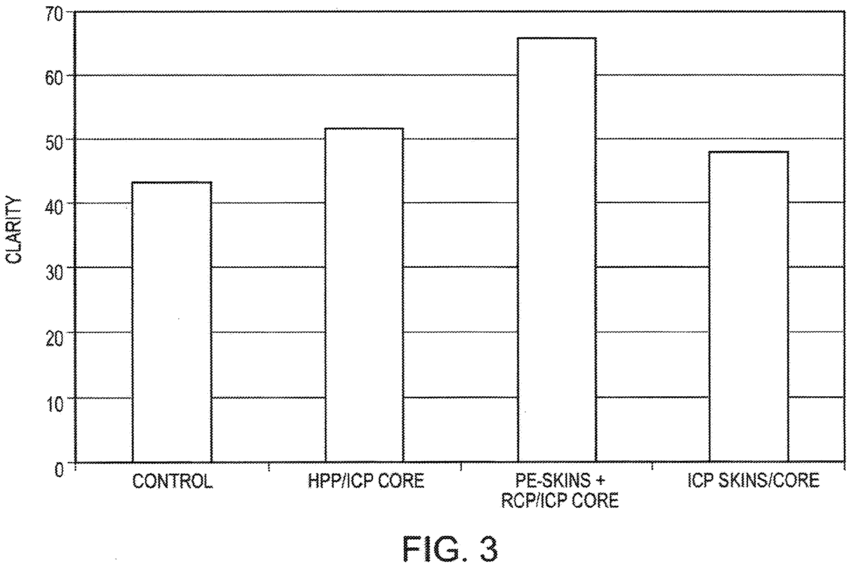

Figure 3 illustrates clarity of the various samples. All samples A, B, C, and E exhibited improved clarity as compared to the control sample.

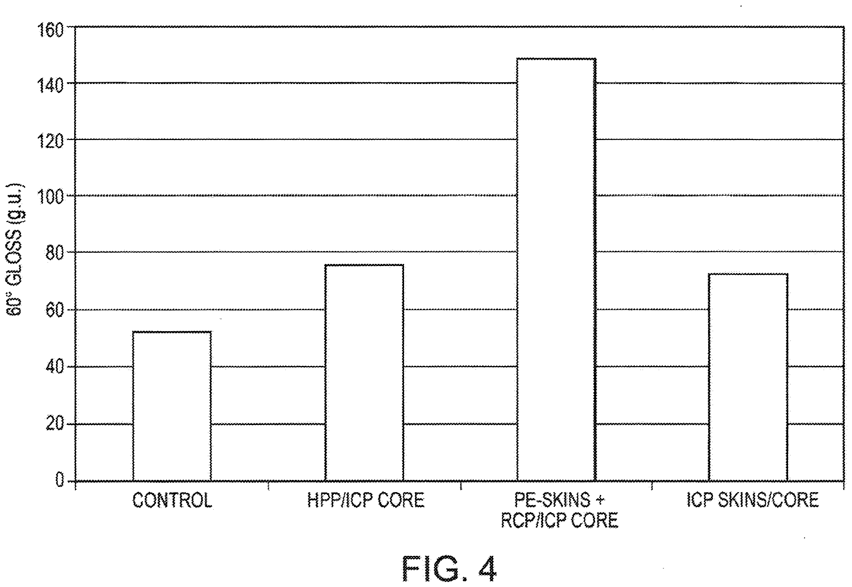

Figure 4 illustrates 60° gloss values for the various samples. All samples A, B, C, and E exhibited higher gloss values as compared to the control sample. Typically, higher gloss values are desirable for top coats and metallic ink applications.

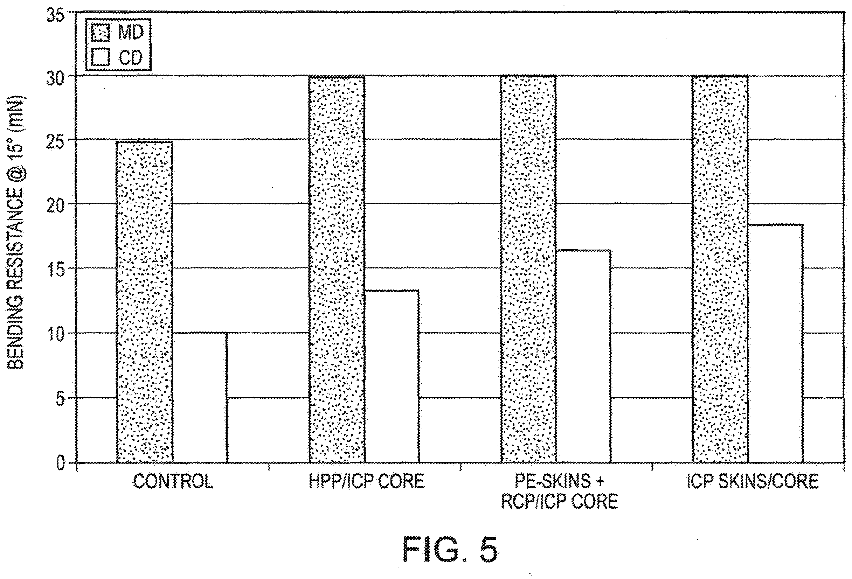

Figure 5 illustrates stiffness or bending resistance in a machine direction (MD) and a cross direction (CD) for the samples and control. All samples exhibited greater stiffness in both the machine direction and in the cross direction as compared to the control sample. Typically, higher stiffness is preferred for dispensing operations.

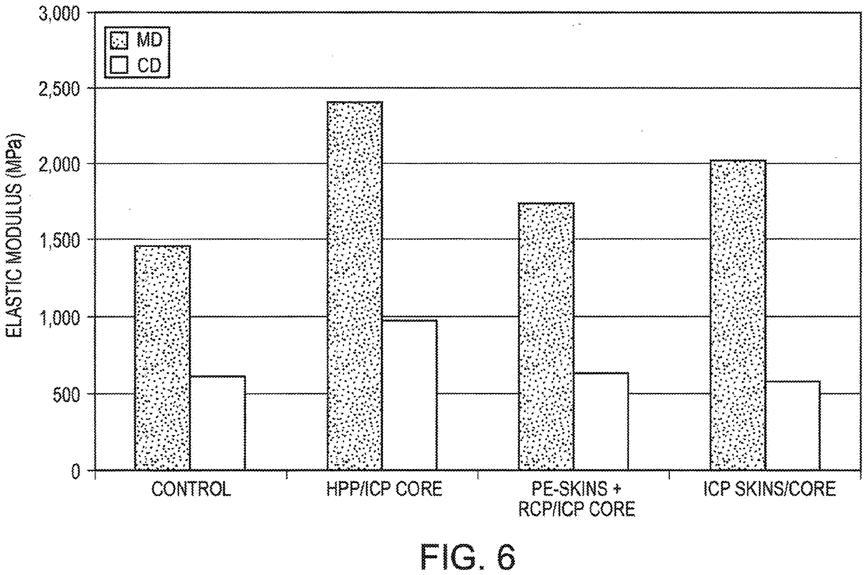

Figure 6 illustrates various elastic modulus values in both the machine direction (MD) and the cross direction (CD) for the samples as compared to the control sample. As will be understood, elastic modulus is a measure of resistance to deformation. All samples A, B, C and E exhibited greater modulus in the machine direction, as compared to the control sample. And, all samples exhibited greater or substantially the same modulus values in the cross direction as compared to the control sample. Typically, high elastic modulus values are preferred for printing. And typically, low modulus values indicate good conformability to a non-planar substrate such as a bottle.

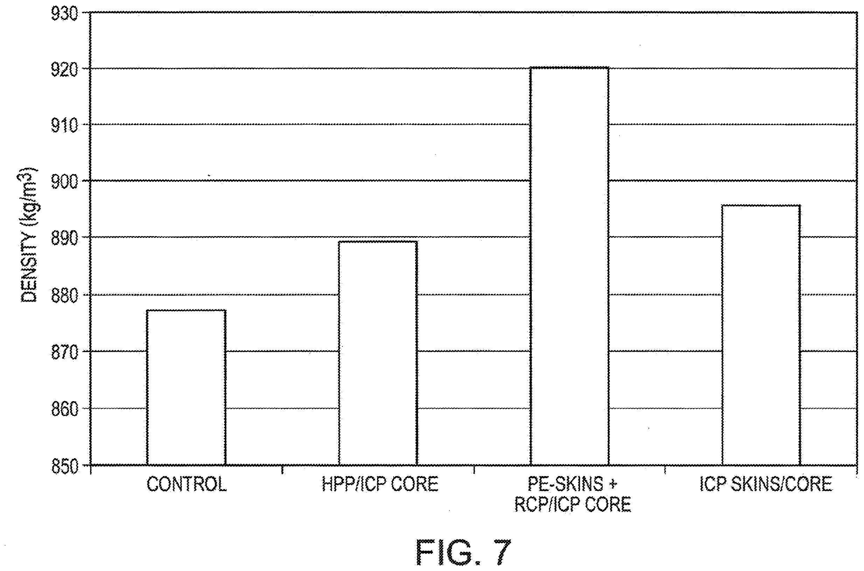

Figure 7 illustrates densities of the samples compared to the control. All samples exhibited greater densities than the sample.

The previously noted results and data surprisingly demonstrate that the incorporation of ICP in a substrate, for example in one or both of a print layer and/or a core layer, does not significantly affect clarity, improved die cutting, and appears to suppress the minimum amount of energy (i.e. temperature and stress) required to orient more crystalline polymers. Examples of more crystalline polymers include homopolymer polypropylene (HPP) and random copolymer polypropylene (RCP). Providing an oriented PE surface without significant defects is believed to provide a significant advance in the art.

Another series of trials were conducted to evaluate film samples formed from single and multiple component blends of random copolymer polypropylene (RCP) and impact copolymer polypropylene (ICP). Specifically, samples were prepared from 100% RCP, a blend of 75% RCP and 25% ICP, 50% RCP and 50% ICP, 25% RCP and 75% ICP, and 100% ICP. The various samples were compared to controls of commercially available materials of PE-85 available from Charter Films of Superior, Wisconsin, and TC-BOPP available from ExxonMobil Chemical. Table 4 summarizes and describes each of the various samples.

**Table 4 - Samples F-L**

| Sample | Description |
|---|---|
| F | 100% RCP |
| G | 75% RCP and 25% ICP |
| H | 50% RCP and 50% ICP |
| I | 25% RCP and 75% ICP |
| J | 100% ICP |
| K | PE-85 Control |
| L | BOPP Control |

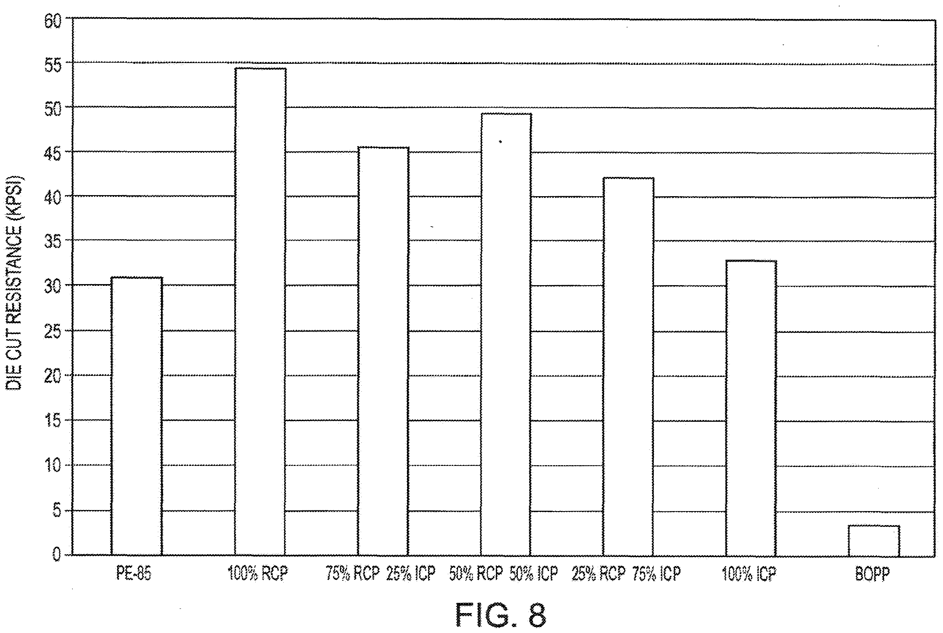

Figure 8 illustrates calculated die cut performance of machine-direction (MD) oriented ICP blends with RCP. It is generally desirable to reduce die cut resistance. Thus, as demonstrated in the data of Figure 8, die cut resistance of RCP materials can be reduced by incorporating amounts of ICP in the blend of RCP and ICP.

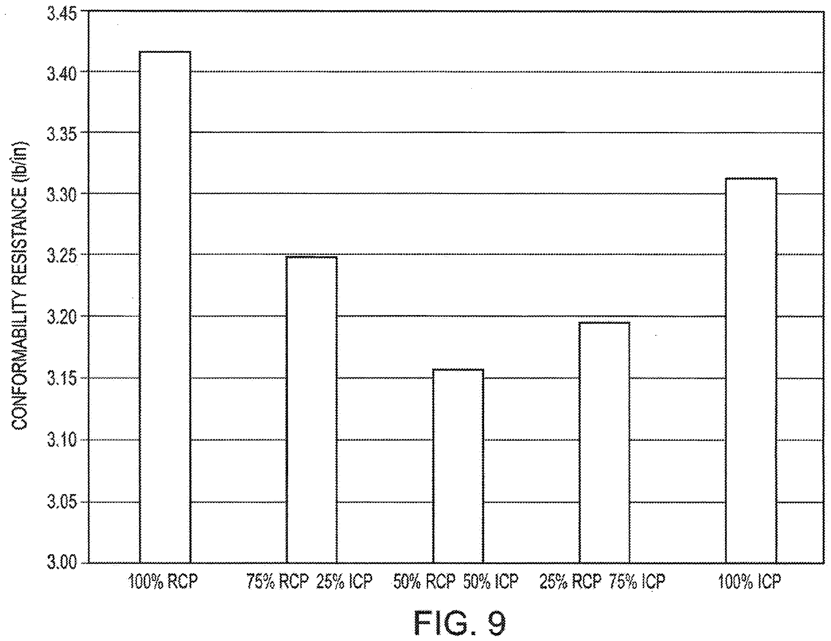

Figure 9 illustrates calculated conformability of machine direction oriented ICP blends with RCP. It is typically preferred to reduce conformability resistance. As evident in Figure 9, conformability resistance of RCP materials can be reduced by incorporating amounts of ICP therein.

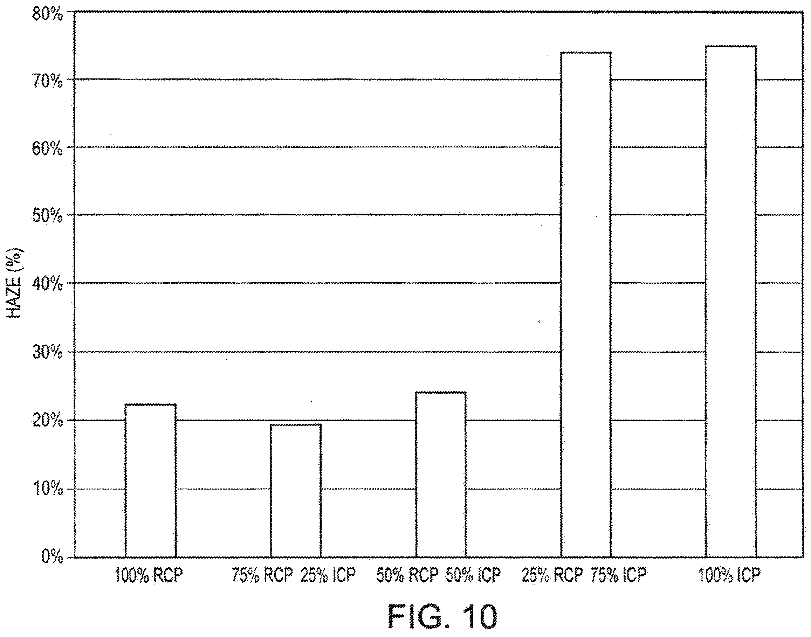

Figure 10 illustrates measured haze of machine direction oriented ICP blends with RCP. Typically, it is desirable to provide films with a low haze percentage. As shown in Figure 10, relatively large proportions of ICP such as up to about 50%, can be used in a blend of RCP and ICP without significantly increasing the haze of the resulting blend.

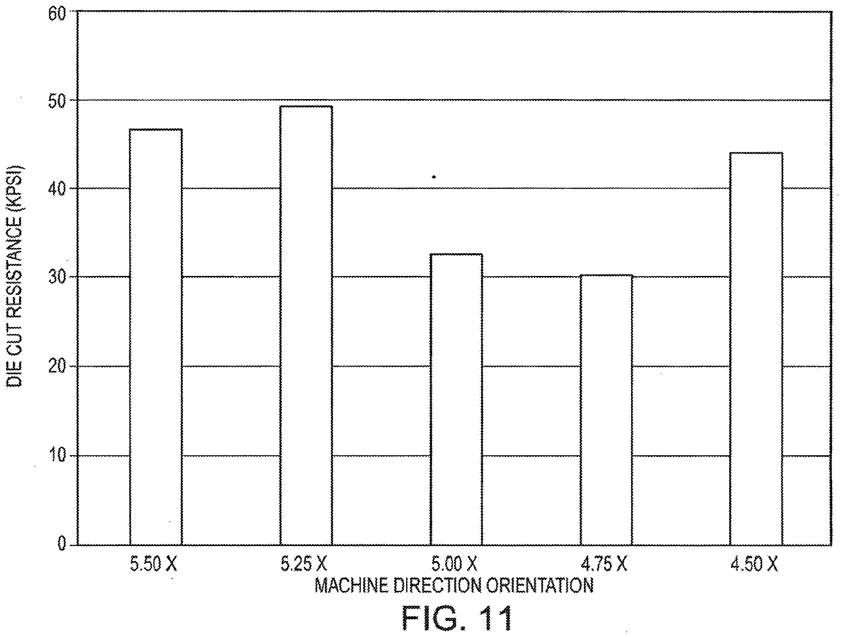

Figure 11 illustrates calculated effect of increasing machine direction orientation on die cutting. For many applications, it is preferred that die cut resistance be relatively low. And so, it can be seen that an orientation in the machine direction of from about 4.50X to about 5.25X provides a reduced die cut resistance as compared to corresponding samples however such samples being at orientations of 5.25X or greater, or orientations of 4.50X or less.

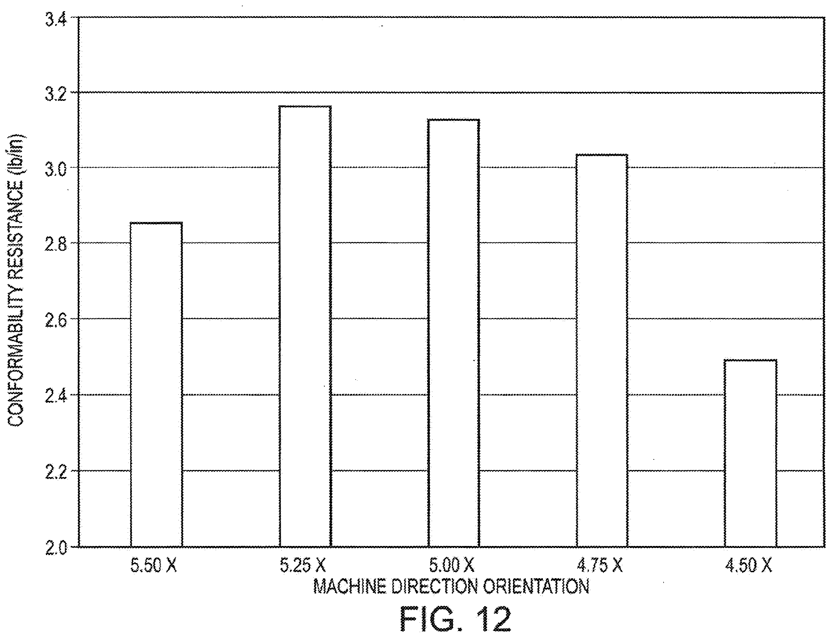

Figure 12 illustrates calculated effect of increasing machine direction orientation on conformability. Typically, it is desirable that conformability resistance be relatively low. As evident in Figure 12, conformabilities can be obtained at orientations less than about 5.00X.

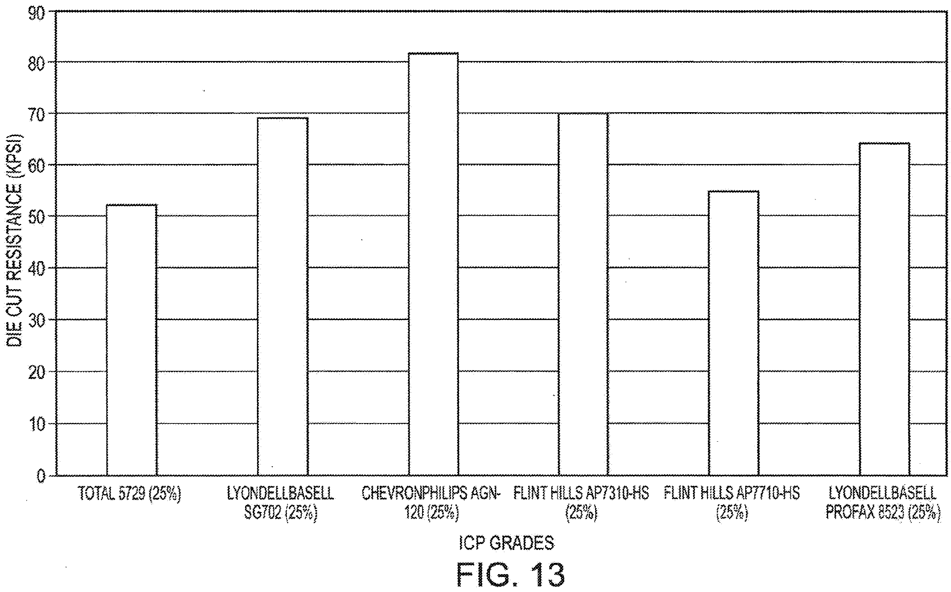

Figure 13 illustrates calculated die cutting resistance of different machine direction oriented ICP grades blended with RCP. The various ICP materials were all commercially available ICP resins available under the following designations: (i) TOTAL 5759, (ii) LyondeIIBaseII SG702, (iii) ChevronPhillips AGN-120, (iv) Flint Hills AP 7310-HS, (v) Flint Hills AP 7710-HS, and (vi) LyondeIIBaseII Profax 8523. Each ICP grade was blended with 25% of RCP.

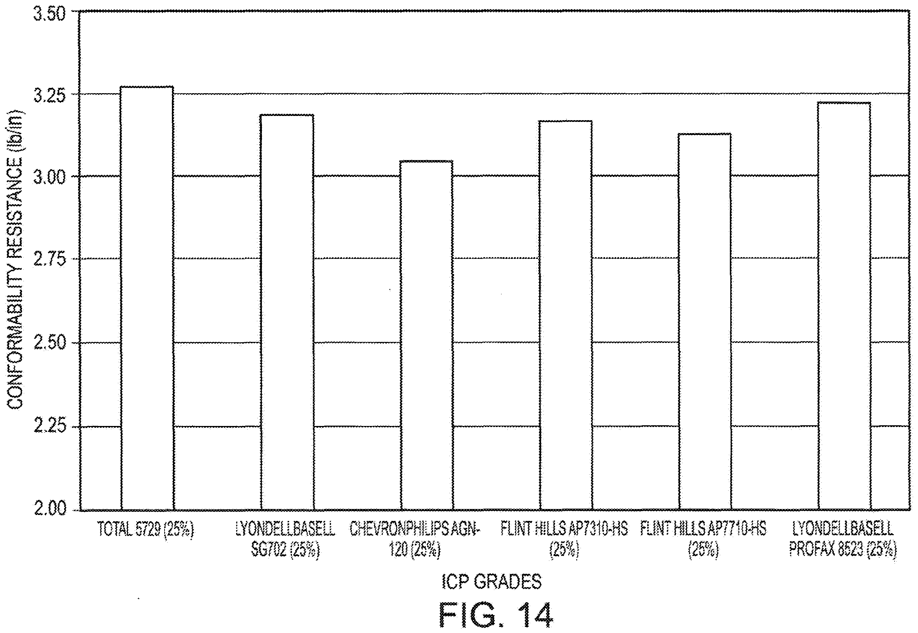

Figure 14 illustrates calculated conformability of different machine direction ICP grades blended with RCP. The same commercially available ICP grades as described in association with Figure 13, were blended with 25% RCP.

Comparing Figures 13 and 14, it is evident that blends of ICP and RCP for improving, i.e. reducing, die cut resistance; and for improving, i.e. reducing, conformability resistance, are generally in opposition to each other.

## Claims

1. A label assembly comprising:
an axially oriented label facestock as a substrate; and
a layer of a pressure sensitive adhesive,
the axially oriented label facestock including a print layer and a core layer and comprising a blend of an impact copolymer polypropylene (ICP) and at least one other polymeric material, wherein the ICP is produced in a reaction by sequential copolymerization of propylene with elastomers, wherein the ICP contains 8 to 20 % elastomer,
wherein the at least one other polymeric material is selected from the group consisting of homopolymer polypropylene (HPP), random copolymer polypropylene (RCP), and combinations thereof,
wherein the core layer includes the ICP blend, and
wherein the label facestock is monoaxially oriented.

2. The label assembly of claim 1, wherein the ICP is one of high impact, medium impact, and low impact as determined by ASTM D256, or as determined by extraction of a rubbery component, or as determined by ethylene content added to a polymerization reactor.

3. The label assembly of claim 1 or 2, wherein the print layer includes the ICP, preferably wherein the print layer further includes at least one polymer selected from the group consisting of polyethylenes, polypropylenes, other polyolefins, (meth)acrylates, ethylene vinyl acetate copolymers, ionomers, and combinations thereof.

4. The label assembly of claim 3, wherein the print layer further includes at least one additive selected from the group consisting of nucleating agents, antioxidants, processing aids, and combinations thereof.

5. The label assembly of any one of claims 1 to 4, wherein the core layer further includes at least one polymer selected from the group consisting of polyethylenes, polypropylenes, other polyolefins, (meth)acrylates, ethylene vinyl acetate copolymers, ionomers, and combinations thereof.

6. The label assembly of any one of claims 1 to 5, wherein the core layer further includes at least one additive selected from the group consisting of nucleating agents, antioxidants, processing aids, and combinations thereof.

7. A method of labeling a container, the method comprising:
providing a label assembly according to any one of claims 1 to 6; and
contacting the layer of the adhesive of the label assembly with the container, wherein the adhesive is a pressure sensitive adhesive.

8. The method of claim 7, further comprising:
heating the label assembly to thereby induce shrinkage of the axially oriented substrate.

## Patentansprüche

1. Etikett-Anordnung, umfassend:
ein axial orientiertes Etikett-Obermaterial als ein Substrat; und
eine Schicht von einem Haftkleber,
wobei das axial orientierte Etikett-Obermaterial eine Druckschicht und eine Kernschicht einschließt und ein Blend eines Impakt-Copolymer-Polypropylens (ICP) und mindestens eines anderen Polymermaterials umfasst, wobei das ICP in einer Reaktion durch sequentielle Copolymerisation von Propylen mit Elastomeren erzeugt worden ist, wobei das ICP 8% bis 20% Elastomer enthält,
wobei das mindestens eine andere Polymermaterial aus der Gruppe, bestehend aus Homopolymer-Polypropylen (HPP), statistischem Copolymer-Polypropylen (RCP) und Kombinationen davon, ausgewählt ist,
wobei die Kernschicht das ICP-Blend einschließt, und
wobei das Etikett-Obermaterial monoaxial orientiert ist.

2. Etikett-Anordnung gemäß Anspruch 1, wobei das ICP eines von hoher Schlagzähigkeit, mittlerer Schlagzähigkeit und niedriger Schlagzähigkeit, bestimmt mittels ASTM D256 oder bestimmt durch Extraktion einer kautschukartigen Komponente oder bestimmt durch Ethylenanteil zugegeben zu einem Polymerisationsreaktor, ist.

3. Etikett-Anordnung gemäß Anspruch 1 oder 2, wobei die Druckschicht das ICP einschließt, wobei vorzugsweise die Druckschicht weiter mindestens ein Polymer, ausgewählt aus der Gruppe, bestehend aus Polyethylenen, Polypropylenen, anderen Polyolefinen, (Meth)acrylaten, Ethylenvinylacetat-Copolymeren, lonomeren und Kombinationen davon, einschließt.

4. Etikett-Anordnung gemäß Anspruch 3, wobei die Druckschicht weiter mindestens ein Additiv, ausgewählt aus der Gruppe, bestehend aus keimbildenden Mitteln, Antioxidantien, Verarbeitungshilfsmitteln und Kombinationen davon, einschließt.

5. Etikett-Anordnung gemäß einem der Ansprüche 1 bis 4, wobei die Kernschicht weiter mindestens ein Polymer, ausgewählt aus der Gruppe, bestehend aus Polyethylenen, Polypropylenen, anderen Polyolefinen, (Meth)acrylaten, Ethylvinylacetat-Copolymeren, lonomeren und Kombinationen davon, einschließt.

6. Etikett-Anordnung gemäß einem der Ansprüche 1 bis 5, wobei die Kernschicht weiter mindestens ein Additiv, ausgewählt aus der Gruppe, bestehend aus keimbildenden Mitteln, Antioxidantien, Verarbeitungshilfsmitteln und Kombinationen davon, einschließt.

7. Verfahren zum Etikettieren eines Behälters, wobei das Verfahren umfasst:
das Bereitstellen einer Etikett-Anordnung gemäß einem der Ansprüche 1 bis 6, und
das Inkontaktbringen der Schicht des Haftmittels der Etikett-Anordnung mit dem Behälter, wobei das Haftmittel ein Haftkleber ist.

8. Verfahren gemäß Anspruch 7, weiter umfassend:
das Erwärmen der Etikett-Anordnung, um dadurch Schrumpfung des axial orientierten Substrats zu induzieren.

## Revendications

1. Ensemble d'étiquette comprenant :
un frontal d'étiquette axialement orienté en tant que substrat, et
une couche d'adhésif autocollant,
le frontal d'étiquette axialement orienté comprenant une couche d'impression et une couche de coeur, et comprenant un mélange d'un polypropylène copolymère résistant aux chocs (ICP) et d'au moins un autre matériau polymère, où l'ICP est produit par une réaction de copolymérisation séquentielle de propylène avec des élastomères, où l'ICP contient 8 à 20% d'élastomère,
dans lequel le au moins un autre matériau polymère est choisi parmi le groupe consistant en un polypropylène homopolymère (HPP), un polypropylène copolymère statistique (RCP) et leurs combinaisons,
dans lequel la couche de coeur comprend le mélange d'ICP, et
dans lequel le frontal d'étiquette est orienté de manière monoaxiale.

2. Ensemble d'étiquette selon la revendication 1, dans lequel l'ICP présente une résistance aux chocs élevée, moyenne ou faible, déterminée selon ASTM D256 ou déterminée par extraction du composant caoutchouteux, ou déterminée par la teneur en éthylène ajoutée au réacteur de polymérisation.

3. Ensemble d'étiquette selon la revendication 1 ou 2, dans lequel la couche d'impression contient l'ICP, de préférence dans lequel la couche d'impression comprend en outre, au moins un polymère choisi parmi le groupe consistant en les polyéthylènes, les polypropylènes, d'autres polyoléfines, des (méth)acrylates, des copolymères éthylène-acétate de vinyle, des ionomères et leurs combinaisons.

4. Ensemble d'étiquette selon la revendication 3, dans lequel la couche d'impression comprend en outre, au moins un additif choisi parmi le groupe consistant en des agents de nucléation, des antioxydants, des aides au traitement et leurs combinaisons.

5. Ensemble d'étiquette selon l'une quelconque des revendications 1 à 4, dans lequel la couche de coeur comprend en outre, au moins un polymère choisi parmi le groupe consistant en les polyéthylènes, les polypropylènes, d'autres polyoléfines, des (méth)acrylates, des copolymères éthylène-acétate de vinyle, des ionomères et leurs combinaisons.

6. Ensemble d'étiquette selon l'une quelconque des revendications 1 à 5, dans lequel la couche de coeur comprend en outre, au moins un additif choisi parmi le groupe consistant en des agents de nucléation, des antioxydants, des aides au traitement et leurs combinaisons.

7. Procédé d'étiquetage d'un récipient, le procédé comprenant :
la mise à disposition d'un ensemble d'étiquette selon l'une quelconque des revendications 1 à 6, et
la mise en contact de la couche d'adhésif de l'ensemble d'étiquette avec le récipient, l'adhésif étant un adhésif autocollant.

8. Procédé selon la revendication 7, comprenant en outre :
le chauffage de l'ensemble d'étiquette pour induire le retrait du substrat orienté axialement.
